# EUROPÄISCHE PATENTSCHRIFT

(11) **EP 3 390 140 B1**
(45) Veröffentlichungstag und Bekanntmachung des Hinweises auf die Patenterteilung: **05.02.2020**
(21) Anmeldenummer: 16829073.2
(22) Anmeldetag: 19.12.2016
(51) Int. Cl.: B60L 50/50

(54) **VERFAHREN ZUR DURCHFÜHRUNG WENIGSTENS EINES ENERGIEVERSORGUNGSVORGANGS ZWISCHEN EINER ENERGIEVERSORGUNGSEINHEIT UND WENIGSTENS EINEM MIT ENERGIE ZU VERSORGENDEN KRAFTFAHRZEUG**
METHOD FOR PROVIDING ENERGY BETWEEN AN ENERGY SUPPLIER AND A MOTOR VEHICLE
MÉTHODE POUR DÉLIVRER DE L'ÉNERGIE ENTRE UNE SOURCE D'ÉNERGIE ET UN VÉHICULE AUTOMOBILE

(30) Priorität: 18.12.2015 DE 102015225988
(43) Veröffentlichungstag der Anmeldung: 24.10.2018
(73) Patentinhaber: Volkswagen AG, 38440 Wolfsburg (DE); KUKA Deutschland GmbH, 86165 Augsburg (DE)
(72) Erfinder: SCHÜTZ, Daniel, 38165 Lehre/Essenrode (DE); GROTE, Michael, 38518 Gifhorn (DE); STIEG, Jürgen, 38550 Isenbüttel (DE); JUNGE, Lutz, 38106 Braunschweig (DE); HORSTMANN, Sven, 12163 Berlin (DE); BAGDONAT, Thorsten, 38106 Braunschweig (DE); GRYSCZYK, Sebastian, 38102 Braunschweig (DE); WEISER, Andreas, 38114 Braunschweig (DE); SETTELE, Norbert, 86574 Petersdorf-Willprechtszell (DE)
(74) Vertreter: Zucker, Volker
(86) Internationale Anmeldenummer: PCT/EP2016/081674
(87) Internationale Veröffentlichungsnummer: WO 2017/103249

(56) Entgegenhaltungen:
- WO-A2-2014/174361
- DE-A1-102013 207 906
- US-A1- 2011 254 504
- US-A1- 2014 092 243

## Beschreibung

Die Erfindung betrifft ein Verfahren zur Durchführung wenigstens eines Energieversorgungsvorgangs zwischen einer Energieversorgungseinheit und wenigstens einem mit Energie zu versorgenden Kraftfahrzeug mit den Merkmalen vom Oberbegriff des Patentanspruchs 1.

Die Erfindung betrifft ferner ein Kraftfahrzeug und eine Energieversorgungseinheit zur Durchführung des Verfahrens.

Aus den Dokumenten WO 2013/041133 A1 sowie DE 10 2009 006 982 A1 sind ein Verfahren sowie eine Energieversorgungseinheit gemäß den Merkmalen vom Oberbegriff der Ansprüche 1 und 10 bekannt.

Konkret wird bei der WO 2013/041133 A1 eine auf einer Schiene verfahrbare Energieversorgungseinheit (Ladeeinheit) offenbart, welche eine Vielzahl von Parkplätzen eines Abstellplatzes anfahren und geparkte Elektrofahrzeuge mit elektrischem Strom versorgen kann.
Die verfahrbare Ladeeinheit ist mit einer Bilderfassungseinrichtung in Form einer Kamera ausgerüstet, welche zur Erkennung einer Position einer Energieversorgungs-Schnittstelle (Ladeschnittstelle) eines aufzuladenden Kraftfahrzeugs dient. Zur Vereinfachung der Bilderkennung wird vorgeschlagen, die Ladeschnittstelle mit geeigneten visuellen Merkmalen, beispielsweise Lampen, Markierungen oder Reflektoren zu versehen.
Es wird ferner vorgeschlagen, dass die Ladeeinheit mittels eines Roboterarms auf mehrere Ladekabel zugreifen kann, welche am Kopfende der Parkplätze vom Abstellplatz angeordnet sind. Der Roboter entnimmt jeweils nach dem Anfahren eines Parkplatzes das Ladekabel, indem er einen zugehörigen Ladestecker von einer Aufhängung abgreift und anschließend in die Ladeschnittstelle des aufzuladenden Kraftfahrzeugs steckt. Um den Ladevorgang zwischen einem aufzuladenden Elektrofahrzeug und der Ladeeinheit zu synchronisieren ist zumindest eine Bestätigung des Ladevorgangs durch den Fahrzeugführer erforderlich. Daher wird eine Kommunikation des Kraftfahrzeugs mit der Ladeeinheit über eine Kommunikationseinrichtung, beispielsweise über einen WLAN-Port ermöglicht.

In der DE 10 2009 006 982 A1 ist eine Energieversorgungseinheit bekannt, welche mit einem mehrgelenkigen Roboterarm ausgestattet ist, der zum Positionieren und Anschließen eines Ladesteckers an eine Ladebuchse eines aufzuladenden Kraftfahrzeugs dient. Zusätzlich weist die Energieversorgungseinheit eine Detektoreinheit zur Positionsermittlung der Ladebuchse vom Kraftfahrzeug auf. Die Detektoreinheit erkennt die Position der Ladebuchse des Kraftfahrzeugs auf Basis von optischen oder geometrischen Merkmalen der Ladebuchse.
Ferner ist an der Energieversorgungseinheit eine Kommunikationseinrichtung angeordnet, welche zum Empfangen von Informationen des Kraftfahrzeugs und eines Ladereglers ausgebildet ist. Der Laderegler dient zum Initiieren eines Beginns oder eines Abbruchs eines Ladevorgangs auf Basis des Ladezustands vom Kraftfahrzeug.
Es wird auch vorgeschlagen, die Detektoreinheit zur Ermittlung der Position der Ladebuchse auf Basis eines RFID-Chips auszubilden (RFID = Radio Frequency Identification).

Schließlich wird in der DE 10 2012 216 980 A1 eine Roboterladestation zum Aufladen einer Batterie eines Elektrofahrzeugs beschrieben. Dabei ist der Roboter an einem Standrohr beweglich befestigt, welches mit einer Basisplatte gekoppelt ist.
Der Roboter enthält ein Greiforgan mit einem elektrischen Stecker, welcher zur Kopplung mit einer fahrzeugseitigen Ladedose dient.
Zur Anwesenheitserfassung eines aufzuladenden Kraftfahrzeugs ist in der Basisplatte ein Sensor vorhanden, welcher optische, akustische oder auch RFID-basierte Erfassungsmittel verwendet.
Der Arm des Roboters enthält in der Nähe des Steckers ferner eine Kamera um die Position einer fahrzeugseitigen Ladedose zu erfassen und das Greiforgan des Roboters somit genau zur fahrzeugseitigen Ladedose bewegen zu können. Es wird auch vorgeschlagen, mehrere Kameras zu verwenden, um eine stereoskopische Ansicht des Kraftfahrzeugs und/oder dessen Ladedose bereitstellen zu können.

Dem obigen Stand der Technik ist gemeinsam, dass die Positionsermittlung einer fahrzeugseitigen Energieversorgungs-Schnittstelle immer seitens der Energieversorgungseinheit erfolgt.

Aus der US 2011/254504 A1 ist ein gattungsgemäßes Verfahren zur Durchführung wenigstens eines Energieversorgungsvorganges zwischen einer Energieversorgungseinheit und wenigstens einem mit Energie zu versorgenden Kraftfahrzeug bekannt. Dabei wird die Position der fahrzeugseitigen Energieversorgungs-Schnittstelle aus einer Datenbank der Energieversorgungseinheit gelesen.

Die DE 10 2013 207 906 A1 sowie WO 2014/174361 A2 beschreiben eine fahrzeugseitige Kamera und optisch erfassbare Merkmale der Energieversorgungseinheit, um das Einparken des Fahrzeugs zu erleichtern.

Der Erfindung liegt die Aufgabe zu Grunde, ein Verfahren zur Durchführung eines Energieversorgungsvorgangs zwischen einer Energieversorgungseinheit und einem mit Energie zu versorgenden Kraftfahrzeug bereitzustellen, welches einfach und effizient durchführbar ist.

Des Weiteren liegt der Erfindung die Aufgabe zu Grunde, ein geeignetes Kraftfahrzeug und eine geeignete Energieversorgungseinheit zur Durchführung des Verfahrens bereitzustellen.

Vorliegende Aufgaben werden durch die Merkmale von Patentanspruch 1, 4 und 8 gelöst. Vorteilhafte Ausbildungen beziehungsweise Weiterbildungen der Erfindung sind den jeweiligen abhängigen Ansprüchen zu entnehmen.

Die Erfindung geht zunächst von einem Verfahren zur Durchführung eines Energieversorgungsvorgangs zwischen einer Energieversorgungseinheit und einem mit Energie zu versorgenden Kraftfahrzeug aus. Dabei wird eine Position einer fahrzeugseitigen Energieversorgungs-Schnittstelle ermittelt und es erfolgt eine automatisierte Kopplung zwischen der fahrzeugseitigen Energieversorgungs-Schnittstelle und einer Energieversorgungs-Schnittstelle der Energieversorgungseinheit. Die automatisierte Kopplung wird dadurch bewerkstelligt, dass die Energieversorgungs-Schnittstelle der Energieversorgungseinheit durch einen Roboter zur fahrzeugseitigen Energieversorgungs-Schnittstelle bewegt und mit dieser gekoppelt wird.

Erfindungsgemäß wird nun vorgeschlagen, dass die Position der fahrzeugseitigen Energieversorgungs-Schnittstelle relativ zur Energieversorgungseinheit vor Durchführung des Energieversorgungsvorgangs durch das Kraftfahrzeug selbst ermittelt und vom Kraftfahrzeug an die Energieversorgungseinheit übermittelt wird.

Auf diese Weise kann das Verfahren sehr effizient gestaltet werden.

Somit ist es vor der Durchführung eines Energieversorgungsvorgangs nicht notwendig, dass seitens der Energieversorgungseinheit eine Positionserkennung der fahrzeugseitigen Energieversorgungs-Schnittstelle durchgeführt wird. Dies kann insbesondere dann zu Zeitvorteilen führen, wenn mit einer Energieversorgungseinheit mehrere Kraftfahrzeuge bedient werden sollen.

So kann beispielsweise ein zweites zu versorgendes Kraftfahrzeug bereits dann die Position seiner Energieversorgungs-Schnittstelle relativ zur Energieversorgungseinheit ermitteln und an die Energieversorgungseinheit übermitteln, während ein erstes Kraftfahrzeug bereits mit Energie versorgt wird. Beim Beginn des Energieversorgungsvorgangs für das zweite Kraftfahrzeug ist eine vorherige Ermittlung der Position der fahrzeugseitigen Energieversorgungs-Schnittstelle dann nicht mehr notwendig, was einen entsprechenden Zeitvorteil mit sich bringt. Der Roboter kennt bereits die Positionsdaten und kann diese direkt anfahren.

Es ist ausdrücklich darauf hinzuweisen, dass es sich bei dem Begriff "Energie" nicht nur um elektrische Energie in Form von Strom, sondern auch um chemische Energie in Form von flüssigem oder gasförmigem Kraftstoff (z. B. Benzin, Diesel, Gas, Wasserstoff) handeln kann.

Dementsprechend ist auch der Begriff "Energieversorgungseinheit" zu verstehen, welche beispielsweise in der Art einer Ladestation für elektrischen Strom, einer Zapfsäule für Kraftstoff oder dergleichen ausgebildet sein kann. Eine Kombination solcher Ausbildungen ist vor dem Hintergrund hybrider Fahrzeuge durchaus denkbar.

Des Weiteren kann der Roboter als Baueinheit in die Energieversorgungseinheit baulich integriert sein, muss es aber nicht. Der Roboter kann auch als separat ansteuerbare Bewegungseinrichtung für die Energieversorgungs-Schnittstelle der Energieversorgungseinheit ausgebildet sein. Im Übrigen ist unter "Roboter" im Sinne der Erfindung jede Einrichtung zu verstehen, die geeignet ist, eine Energieversorgungs-Schnittstelle der Energieversorgungseinheit zu bewegen und mit einer Energieversorgungs-Schnittstelle eines Kraftfahrzeugs zu koppeln. In konkreter Ausprägung kann als Roboter daher bereits ein einfacher Aktuator, aber auch ein komplexer Industrieroboter mit mehreren Freiheitsgraden verstanden werden.

Gemäß einer ersten Weiterbildung der Erfindung wird die Position der fahrzeugseitigen Energieversorgungs-Schnittstelle anhand von optisch erfassbaren Merkmalen der Energieversorgungseinheit ermittelt.

Dies trägt zur Vereinfachung des Verfahrens bei, da optisch erfassbare Merkmale gut und zuverlässig mit verfügbaren Bilderfassungsgeräten, wie beispielsweise Kameras oder Scannern erfassbar sind.

Optisch erfassbare Merkmale können beispielsweise auf die Energieversorgungseinheit aufgebrachte Markierungen oder besondere geometrische Formen der Energieversorgungseinheit sein.

In diesem Zusammenhang ist darauf hinzuweisen, dass zur Durchführung des erfindungsgemäßen Verfahrens bzw. zur Positionsermittlung einer fahrzeugseitigen Energieversorgungs-Schnittstelle der Einsatz unterschiedlichster Messsysteme denkbar ist.

So ist beispielsweise der Einsatz einer Art Sensorleiste denkbar, bei dem ein Tiefensensor, eine Webcam, ein 3D-Mikrofon und ein Beschleunigungssensor miteinander kombiniert werden. Hierdurch können markante geometrische Punkte der Energieversorgungseinheit im Raum sehr gut gemessen werden.
Unter Einsatz von Laserscannern können Markierungen oder geometrische Formen der Energieversorgungseinheit mittels des bekannten Triangulationsverfahrens genau und kostengünstig erfasst werden.

Photomischdetektoren (PMD-Kameras) arbeiten nach dem Prinzip des Lichtimpulsverfahrens, bei dem Messobjekte von Lichtimpulsen angeleuchtet und die Signallaufzeit gemessen wird. Aufgrund der Laufzeit kann die Entfernung zwischen Kamera und Objekt errechnet werden.

Zur räumlichen Messung (Photogrammmetrie) von geometrischen Formen der Energieversorgungseinheit ist der Einsatz mehrerer, wenigstens zweier, nah beieinander angeordneter Kameras denkbar.

Je nach favorisiertem Messsystem können die Markierungen als reflektierende Aufkleber oder reflektierende Halbkugeln (also als passive Markierungen) oder selbstleuchtend, z. B. als Leuchtdioden (also als aktive Markierungen) ausgebildet sein.

Sobald die optisch erfassbaren Merkmale der Energieversorgungseinheit bzw. deren Position durch eine geeignete Bilderfassungseinrichtung des Kraftfahrzeugs ermittelt wurden, kann mit bekannten Verfahren der Koordinaten-Transformation auch auf die Position der fahrzeugseitigen Energieversorgungs-Schnittstelle geschlossen werden.

Die genaue Position einer Bilderfassungseinrichtung (beispielsweise Kamera oder Scanner) im Kraftfahrzeug relativ zur fahrzeugseitigen Energieversorgungs-Schnittstelle ist bekannt. Wird die Position der Bilderfassungseinrichtung relativ zu den optisch erfassbaren Merkmalen der Energieversorgungseinheit ermittelt, kann demzufolge auch auf die Lage der fahrzeugseitigen Energieversorgungs-Schnittstelle relativ zu den optisch erfassbaren Merkmalen der Energieversorgungseinheit geschlossen werden.

Dennoch kann es durchaus hilfreich sein, wenn in einer anderen Ausbildung des Erfindungsgedankens die Ermittlung der Position der fahrzeugseitigen Energieversorgungs-Schnittstelle zusätzlich durch den Roboter anhand von optisch erfassbaren Merkmalen im Bereich der fahrzeugseitigen Energieversorgungs-Schnittstelle erfolgt. Durch eine derartige Redundanz in der Messung kann die Genauigkeit der Positionsermittlung erhöht werden.

Unabhängig vom beanspruchten, erfindungsgemäßen Verfahren ist es jedoch denkbar, dass die Position der fahrzeugseitigen Energieversorgungs-Schnittstelle allein durch wenigstens eine Bilderfassungseinrichtung erfolgt, die auf dem Roboter angeordnet ist.
In diesem Fall ist es zur Erleichterung der Bilderkennung dann besonders sinnvoll und zweckmäßig, wenn das zu versorgende Kraftfahrzeug eine Energieversorgungs-Schnittstelle aufweist, um die außen herum wenigstens drei optisch erfassbaren Merkmale angebracht sind, welche in Bezug auf einen Bezugspunkt der Energieversorgungs-Schnittstelle ungleichmäßig um diese verteilt und/oder jeweils kodiert sind.

Wie bereits erwähnt, betrifft die Erfindung auch ein Kraftfahrzeug zur Durchführung des erfindungsgemäßen Verfahrens. Dieses ist dadurch gekennzeichnet, dass es wenigstens eine Bilderfassungseinrichtung, eine Bildverarbeitungseinheit zur Verarbeitung der erfassten Bildsignale, eine Speichereinheit, eine Vergleichseinheit, eine Recheneinheit und eine Kommunikationseinheit aufweist. Die Bilderfassungseinrichtung, die Verarbeitungseinheit, die Speichereinheit, die Vergleichseinheit, die Recheneinheit und die Kommunikationseinheit sind signaltechnisch miteinander verbunden. Sie sind derart ausgebildet, dass durch die Bilderfassungseinrichtung optisch erfassbare Merkmale der Energieversorgungseinheit erfassbar sind und ein erfasstes Merkmalsmuster mit einem in der Speichereinheit abgelegten Referenzmuster abgleichbar ist. Bei einem positiven Abgleich mit dem Referenzmuster kann durch die Recheneinheit auf Grund des erfassten Merkmalsmusters eine Position der fahrzeugseitigen Energieversorgungs-Schnittstelle relativ zur Energieversorgungseinheit berechnet werden. Diese Position ist dann über die Kommunikationseinheit an die Energieversorgungseinheit übermittelbar.

Die Bilderfassungseinrichtung kann beispielsweise als handelsübliche Webcam oder auch als Laserscanner ausgebildet sein. Als Kommunikationseinheit ist beispielsweise die Ausbildung als WLAN-Port oder eine sonstige drahtlose Kommunikation, wie beispielsweise Bluetooth denkbar.

Es hat sich gezeigt, dass es der Genauigkeit und Störunanfälligkeit der Positionsermittlung im Fall einer Positionsermittlung der fahrzeugseitigen Energieversorgungs-Schnittstelle durch eine Bilderfassungseinrichtung äußerst zuträglich ist, wenn das Kraftfahrzeug eine Energieversorgungs-Schnittstelle aufweist, um die außen herum wenigstens drei optisch erfassbare Merkmale angeordnet sind, welche in Bezug auf einen Bezugspunkt der Energieversorgungs-Schnittstelle ungleichmäßig um diese verteilt angeordnet sind. Als Bezugspunkt kann beispielsweise bei Ausbildung der Energieversorgungs-Schnittstelle als elektrische Buchse ein bestimmter Steckkontakt gewählt werden.

Die optisch erfassbaren Merkmale sind vorzugsweise als Markierungen aufgeklebt.

"Ungleichmäßig" im Sinne der Erfindung bedeutet dabei, dass die optisch erfassbaren Merkmale in ihrem radialen Abstand zu einem solchen Bezugspunkt unterschiedlich angeordnet sind und/oder dass sie innerhalb eines Vollwinkels von 360 Grad um diesen Bezugspunkt in unterschiedlichen Winkelabständen zueinander angeordnet sind.

Der Begriff "außen um die Energieversorgungs-Schnittstelle herum" bedeutet also, dass die optisch erfassbaren Merkmale nicht Bestandteile der Energieversorgungs-Schnittstelle selbst sind.

Es ist dabei der Genauigkeit der Positionserkennung zuträglich, wenn vier optisch erfassbare Merkmale vorhanden sind.

Weiterhin kann die Zuverlässigkeit der Positionserkennung auch dadurch verbessert beziehungsweise beschleunigt werden, wenn jede der Markierungen kodiert ist. Eine solche Kodierung kann beispielsweise durch ein Kreismuster realisiert sein, welche an unterschiedlichen Stellen unterbrochen ist.
Alternativ ist auch denkbar, dass das Kraftfahrzeug eine Energieversorgungs-Schnittstelle aufweist, an der ein rahmenartiges Bauteil befestigt ist, welches eine andere Farbe als die Energieversorgungs-Schnittstelle selbst aufweist.

So sind beispielsweise als elektrische Buchsen ausgebildete Energieversorgungs-Schnittstellen zumeist schwarz ausgebildet. Dies erschwert eine Bilderkennung beträchtlich. Wird auf die Energieversorgungs-Schnittstelle ein rahmenartiges Bauteil aufgebracht, welches beispielsweise in der Farbe Grau oder Weiß gehalten ist, so kann auf einfache Weise ein guter Kontrast erschaffen und die Bilderkennung erleichtert werden.

Schließlich betrifft die Erfindung auch eine Energieversorgungseinheit zur Durchführung des erfindungsgemäßen Verfahrens. Diese weist wenigstens ein Roboter zum Bewegen wenigstens einer Energieversorgungs-Schnittstelle der Energieversorgungseinheit zu einer Energieversorgungs-Schnittstelle eines Kraftfahrzeugs auf. Ferner ist die Energieversorgungseinheit mit wenigstens einer Kommunikationseinrichtung versehen, welche beispielsweise als WLAN-Port oder als sonstige drahtlose Funkverbindung (z. B. Bluetooth) ausgebildet sein kann.

Die Energieversorgungseinheit ist dadurch gekennzeichnet, dass diese mit mehreren optisch erfassbaren Merkmalen versehen und die wenigstens eine Kommunikationseinrichtung zumindest zur Kommunikation mit einer fahrzeugseitigen Kommunikationseinrichtung ausgebildet ist. Die Kommunikation ist derart durchführbar, dass zumindest Positionsdaten der fahrzeugseitigen Energieversorgungs-Schnittstelle relativ zur Energieversorgungseinheit empfangbar sind.

Die optisch erfassbaren Merkmale sind vorzugsweise in Form von Markierungen auf die Energieversorgungseinheit aufgebracht.

Um die Positionserkennung einer fahrzeugseitigen Bilderfassungseinrichtung relativ zur Energieversorgungseinheit zu erleichtern, können auch hier die optisch erfassbaren Merkmale der Energieversorgungseinheit in Bezug auf einen Bezugspunkt der Energieversorgungs-Schnittstelle ungleichmäßig um die Energieversorgungs-Schnittstelle verteilt angeordnet sein. Alternativ oder zusätzlich kann jedes der optisch erfassbaren Merkmale kodiert sein. Die Kodierung kann gleichermaßen über an unterschiedlichen Stellen unterbrochene Kreisringe erfolgen.

Bevorzugte Ausführungsbeispiele der Erfindung sind in den Figuren dargestellt und werden anhand der Figuren in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: eine Energieversorgungseinheit von oben in der Vogelperspektive,
- Fig. 2: die Ansicht der Energieversorgungseinheit gemäß Ansicht II aus Fig. 1,
- Fig. 3: die Einzeldarstellung einer fahrzeugseitigen Energieversorgungs-Schnittstelle aus Ansicht III in Fig. 1,
- Fig. 4: eine alternative Ausführungsform einer fahrzeugseitigen Energieversorgungs-Schnittstelle vergleichbar mit der Ansicht aus Fig. 3,
- Fig. 5: ein Ablaufplan zur Verdeutlichung einer ersten Ausbildung des Verfahrens und
- Fig. 6: ein Ablaufplan zur Verdeutlichung einer Variante des Verfahrens.

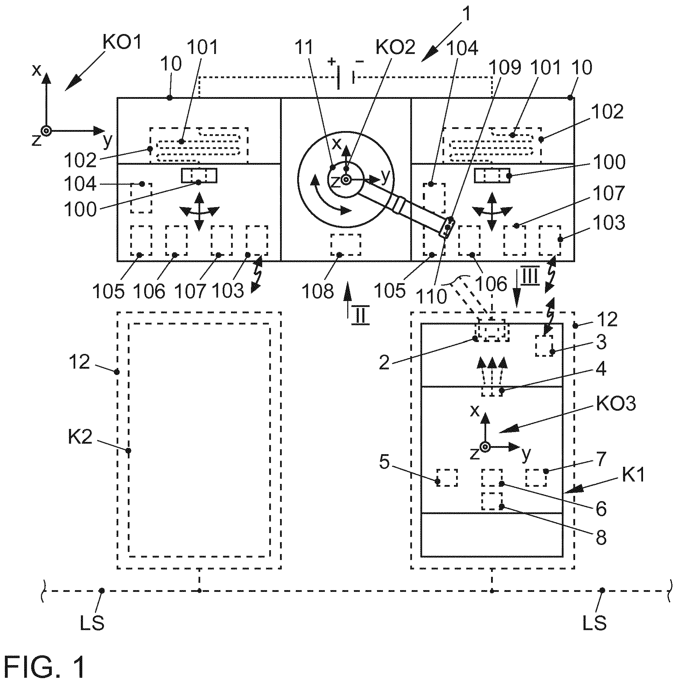

In der Fig. 1 ist eine Energieversorgungseinheit 1 ersichtlich. Konkret ist die Energieversorgungseinheit 1 als von Elektrofahrzeugen anfahrbarer Abstellplatz zur elektrischen Aufladung der Elektrofahrzeuge ausgebildet.

Vorder Energieversorgungseinheit 1 sind zwei Parkplatz-Markierungen 12 ersichtlich, innerhalb derer aufzuladende Kraftfahrzeuge geparkt werden können.

Im vorliegenden Ausführungsbeispiel können aufzuladende Kraftfahrzeuge mittels eines induktiven Leitsystems LS automatisch innerhalb der Parkplatz-Markierungen geparkt und zur Aufladung freigegeben werden.

Die Energieversorgungseinheit 1 weist zwei identisch aufgebaute Ladestationen 10 auf, zwischen denen ein Roboter 11 zur Bedienung beider Ladestationen 10 angeordnet ist. Eine davon abweichende Anzahl von Ladestationen, ebenso eine davon abweichende Anzahl von Robotern ist denkbar.

Der Roboter 11 ist als mehrarmiger und mehrgelenkiger Industrieroboter ausgebildet. Er weist eine Greifeinrichtung 109 auf, mit der er eine Energieversorgungs-Schnittstelle 100 der Ladestation 10 in Form eines Ladesteckers ergreifen und bewegen kann (vergleiche Doppelpfeile).

Konkret kann der Roboter 11 mittels der Greifeinrichtung 109 den Ladestecker 100 mitsamt einem Ladekabel 101 aus der Ladestation 10 herausziehen. Das Ladekabel 101 ist aufwickelbar in einem Aufbewahrungsraum 102 der Ladestation 10 gehalten. Ein aufzuladendes Kraftfahrzeug (Elektrofahrzeug) K1 kann auf Grund des Leitsystems LS mit einer Toleranz von etwa fünf Zentimetern innerhalb einer Parkplatz-Markierung 12 geparkt werden.

Zur Durchführung eines Aufladevorgangs wird von der Greifeinrichtung 109 des Roboters 11 der Ladestecker 100 ergriffen, zu einer fahrzeugseitigen Energieversorgungs-Schnittstelle 2 des aufzuladenden Kraftfahrzeugs K1 in Form einer Ladedose bewegt und mit dieser gekoppelt.

Damit eine solche Kopplung reibungslos möglich ist, muss jedoch zuvor der Roboter 11 die genaue Position der Ladedose 2 kennen.

Zu diesem Zweck ist das Kraftfahrzeug K1 im Bereich des Spiegelfußes seines Innenspiegels (nicht dargestellt) mit einer Bilderfassungseinrichtung 4 in Form einer stereoskopischen Kamera ausgestattet. Diese erkennt anhand von optisch erfassbaren Merkmalen der Ladestation 10 die eigene Position relativ zur Ladestation 10, was später noch näher erläutert werden soll.

Über ein fahrzeugeigenes Koordinatensystem KO3 weiß das Kraftfahrzeug K1 genau, wo sich die Kamera 4 befindet und mit Hilfe gängiger Verfahren der Koordinatentransformation auch, wo sich die Ladedose 2 relativ zur Kamera 4 befindet. Eine solche Koordinatentransformation wird mit Hilfe einer Recheneinheit 8 vollzogen.

Anschließend können die Positionsdaten der Ladedose 2 relativ zur Ladestation 10 mittels einer Kommunikationseinrichtung 3 bspw. in Form eines WLAN-Ports an eine gleichermaßen als WLAN-Port ausbildbare Kommunikationseinrichtung 103 der Ladestation 10 übermittelt werden.

Ferner sind eine Bildverarbeitungseinheit 5, eine Vergleichseinheit 6 und eine Speichereinheit 7 des Kraftfahrzeugs K1 gestrichelt angedeutet. Dabei dient die Bildverarbeitungseinheit 5 zur Verarbeitung der von der Kamera 4 aufgenommenen optischen Merkmale der Ladestation 10. Die Vergleichseinheit 6 dient zum Vergleich eines durch die Kamera 4 aufgenommenen Merkmalmusters mit einem in der Speichereinheit 7 abgelegten Referenzmuster.

Die Kamera 4, die Bildverarbeitungseinheit 5, die Vergleichseinheit 6, die Speichereinheit 7, die Recheneinheit 8 und die Kommunikationseinrichtung 3 sind signaltechnisch miteinander verbunden.

Auch die Ladestationen 10 können jeweils mit einer Bildverarbeitungseinheit 104, einer Vergleichseinheit 105, einer Speichereinheit 106 und einer Recheneinheit 107 ausgestattet sein. Dies ist vor allem dann sinnvoll, wenn eine Positionsermittlung der Ladedose 2 alternativ oder zusätzlich durch den Roboter 11 erfolgen soll.

Für diesen Fall kann die Greifeinrichtung 109 mit einer Bilderfassungseinrichtung 110 ausgestattet sein, welche vorzugsweise als handelsübliche und damit kostengünstige Webcam ausgebildet ist.

Unabhängig davon, durch welche Einheit die Position der Ladedose 2 ermittelt wird, dient eine dem Roboter 11 zugeordnete Steuereinheit 108 zur Ansteuerung des Roboters 11 in Abhängigkeit der ihr übermittelten Positionsdaten der Ladedose 2.

Mit KO1 ist ein Koordinatensystem der Energieversorgungseinheit 1 und mit KO2 ein Koordinatensystem des Roboters 11 beziffert.

Werden der Energieversorgungseinheit 1 über die Kommunikationseinrichtung 103 die Positionsdaten der Ladedose 2 relativ zur Energieversorgungseinheit 1, konkret in Relation zum Koordinatensystem KO1 übermittelt, so kann die Recheneinheit 107 auf Grund bekannter Verfahren der Koordinatentransformation auch auf die relative Lage der Ladedose 2 relativ zum Koordinatensystem KO2 des Roboters schließen und diese Positionsdaten an die Steuereinheit 108 übermitteln..

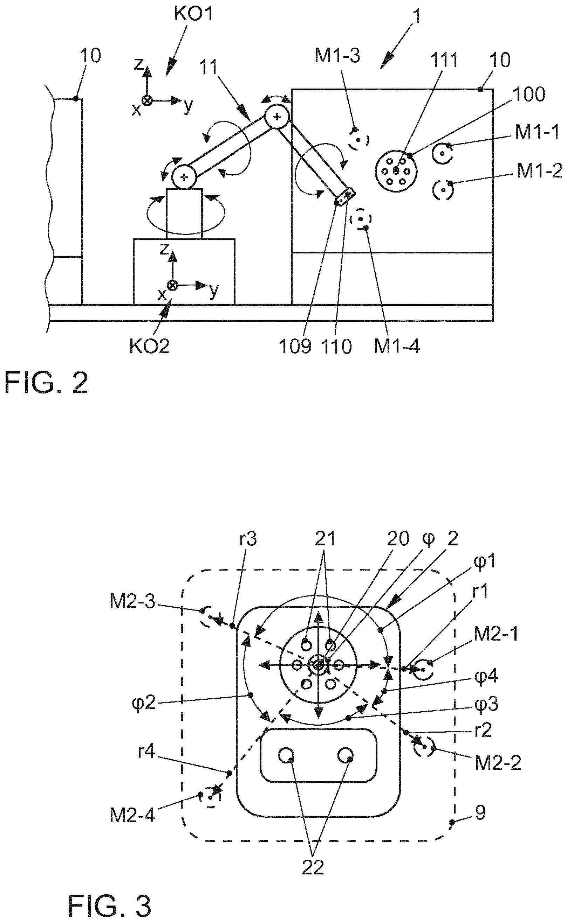

Anhand von Fig. 2 soll nun näher erläutert werden, anhand welcher Merkmale durch das Fahrzeug K1 selbst seine Position beziehungsweise die Position seiner Ladedose 2 relativ zur Energieversorgungseinheit 1 erkannt werden kann.

So ist jede Ladestation 10 an einer, einem aufzuladenden Kraftfahrzeug zugewandten Wandung mit vier optisch erfassbaren Merkmalen M1-1, M1-2, M1-3 und M1-4 in Form von Markierungen versehen. Die genannten Markierungen sind als reflektierende, kontrastreiche Markierungen aufgeklebt. Jede der Markierungen ist kodiert, wobei die Markierungen als kreisrunde Figuren ausgebildet sind und die Kodierung jeweils durch die Anzahl von Unterbrechungen im Kreis realisiert ist.

So weist die Markierung M1-1 eine Unterbrechung, die Markierung M1-2 zwei Unterbrechungen, die Markierung M1-3 drei und die Markierung M1-4 vier Unterbrechungen im Kreis auf.

Des Weiteren ist erkennbar, dass die genannten Markierungen ungleichmäßig um einen bestimmten Bezugspunkt 111 des Ladesteckers 100 angeordnet sind. Deren Position im Koordinatensystem KO1 ist jedoch bekannt. Der Bezugspunkt 111 kann beispielsweise ein Erdungskontakt des Ladesteckers 100 sein.

Als ungleichmäßig im Sinne der Erfindung wird verstanden, dass die genannten Markierungen in ihrem radialen Abstand zu einem solchen Bezugspunkt (hier 111) unterschiedlich angeordnet sind und/oder dass sie innerhalb eines Vollwinkels (360 Grad) um einen solchen Bezugspunkt in unterschiedlichen Winkelabständen zueinander angeordnet sind.

Dies soll in analoger Weise anhand der Fig. 3 erläutert werden.

Diese Figur zeigt die Ladedose 2 des Kraftfahrzeugs K1, welche derart ausgebildet ist, dass ihre Position alternativ oder zusätzlich auch durch die genannte Bilderfassungseinrichtung 110 des Roboters 11 erfasst werden kann.

Es ist erkennbar, dass außerhalb der eigentlichen Ladedose 2, also um diese herum vier optisch erfassbare Merkmale M2-1, M2-2, M2-3 und M2-4 in Form von Markierungen angeordnet sind.

In gleicher Weise wie die genannten Markierungen M1-1 bis M1-4 der Ladestationen 10 sind auch die Markierungen M2-1 bis M2-4 ungleichmäßig um die Ladedose 2 angeordnet. Konkret weisen die genannten Markierungen unterschiedliche radiale Abstände r1 bis r4 beziehungsweise unterschiedliche Radien zu einem Bezugspunkt 20 der Ladedose 2 auf. Der Bezugspunkt 20 kann beispielweise ein Erdungskontakt der Ladedose 2 sein.

Des Weiteren weisen die genannten Markierungen, in Bezug auf einen Vollwinkel ϕ von 360 Grad, zueinander unterschiedliche Winkelabstände ϕ1 bis ϕ4 auf.

Mit 21 sind elektrische Kontakte für Wechselstrom, mit 22 solche für Gleichstrom beziffert.

Die Markierungen M2-1 bis M2-4 sind in gleicher Weise kodiert wie die Markierungen M1-1 bis M1-4.

Durch die ungleichmäßige Anordnung der genannten Markierungen um die genannten Bezugspunkte und/oder durch deren Kodierung können die Genauigkeit und die Geschwindigkeit der Bilderkennung deutlich verbessert werden.

Mit 9 ist eine schwenkbare Abdeckung der Ladedose 2 beziffert, welche gestrichelt angedeutet ist.

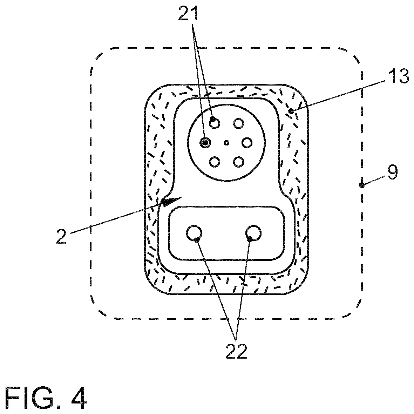

Anhand der Fig. 4 wird noch eine alternative Ausbildung eines Kraftfahrzeugs im Bereich der Ladedose 2 erläutert, wobei die alternative Ausbildung ebenfalls eine Erkennung der Ladedose 2 durch eine Bilderfassungseinrichtung deutlich erleichtert.

So ist die Ladedose 2 randseitig mit einem rahmenartigen Bauteil 13 abgedeckt, welches lösbar (beispielsweise rastend) mit der Ladedose 2 befestigt ist.

Das rahmenartige Bauteil 13 ist gegenüber der aus schwarzem Kunststoff gefertigten Ladedose 2 vorzugsweise aus einem hellgrauen oder weißen Kunststoff gefertigt. Auf diese Weise kann eine sehr gute Kontrastwirkung erzielt werden, so dass für die Bilderfassungseinrichtung 110 des Roboters 11 die Bilderkennung erheblich vereinfacht wird.

Zurückkommend auf die Fig. 1 ist anzumerken, dass mit K2 ein zweites, aufzuladendes Kraftfahrzeug beziffert ist, welches innerhalb einer zweiten Parkplatz-Markierung 12 eingeparkt wurde.

Ein Vorteil des erfindungsgemäßen Verfahrens ist nun, dass das Kraftfahrzeug K2, welches vergleichbar wie das Kraftfahrzeug K1 aufgebaut ist, unabhängig von der Verfügbarkeit des Roboters 11 die Position seiner Ladedose relativ zur Ladestation 10 verorten und diese Position an die Kommunikationseinrichtung 103 der dem Kraftfahrzeug K2 zugeordneten Ladestation 10 übertragen kann.

Sobald der Roboter 11 die Kopplung des ersten Ladesteckers 100 mit der Ladedose 2 des Kraftfahrzeugs K1 vollzogen hat, kann dieser (die Koordinaten der Ladedose vom Kraftfahrzeug K2 bereits kennend) den dem Kraftfahrzeug K2 zugeordneten, zweiten Ladestecker 100 greifen. Der Ladestecker 100 kann dann in geschilderter Weise mit der Ladedose des Kraftfahrzeugs K2 gekoppelt werden, ohne dass eine erneute Positionsermittlung dieser Ladedose durch den Roboter 11 notwendig ist.

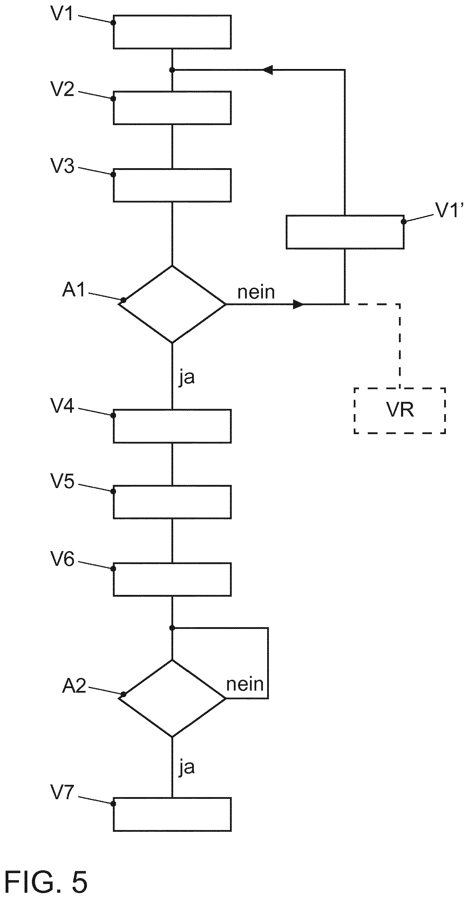

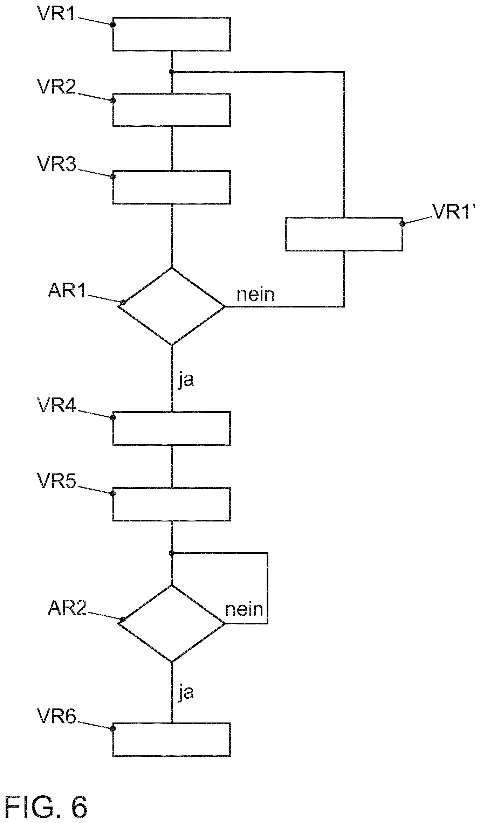

Abschließend soll anhand der Figuren 5 und 6 das erfindungsgemäße Verfahren nochmals kurz skizziert werden.

So wird in einem Verfahrensschritt V1 der Fig. 5 zunächst ein automatisches Einparken des Kraftfahrzeugs K1 innerhalb der Parkplatz-Markierung 12 mit einer Zentimeter-Toleranz von bevorzugt 5 cm durchgeführt. Anschließend wird durch eine Bilderkennung der bordeigenen Kamera 4 das aus den Markierungen M1-1 bis M1-4 resultierende Markierungsmuster um den Ladestecker 100 der Ladestation 10 erkannt (Verfahrensschritt V2).

In einem Verfahrensschritt V3 wird ein Vergleich des erkannten Markierungsmusters mit einem gespeicherten Referenzmuster durchgeführt. Eine Abfrage A1 fragt ab, ob das erkannte Markierungsmuster mit dem gespeicherten Referenzmuster übereinstimmt. Falls nein, muss in einem Verfahrensschritt V1' eine Ausgleichsbewegung seitens des aufzuladenden Kraftfahrzeugs K1 durchgeführt werden.

Bei Übereinstimmung des erkannten Markierungsmusters mit dem Referenzmuster erfolgt eine Berechnung der Position der bordeigenen Kamera 4 relativ zur Energieversorgungseinheit, insbesondere relativ zu einem Bezugspunkt der Energieversorgungseinheit. Über Koordinatentransformation wird letztendlich eine Position der fahrzeugeigenen Ladedose 2 relativ zur Energieversorgungseinheit 1 berechnet (Verfahrensschritt V4).

Die Positionskoordinaten werden anschließend zur Kommunikationseinrichtung 103 der Ladestation 10 übermittelt (Verfahrensschritt V5). Danach wird in einem Verfahrensschritt V6 der Ladestecker 100 der Ladestation 10 durch den Roboter 11 zur fahrzeugseitigen Ladedose 2 bewegt und mit dieser gekoppelt.

In einer Abfrage A2 wird abgefragt, ob das Kraftfahrzeug aufgeladen ist oder nicht.

Nach erfolgter Aufladung wird schließlich in einem Verfahrensschritt V7 durch den Roboter 11 der Ladestecker 100 von der Ladedose 2 wieder entkoppelt und zur Ladestation 10 zurückbewegt.

In einer Abwandlung des Verfahrens kann bei einer Nichtübereinstimmung des erkannten Markierungsmusters mit dem abgespeicherten Referenzmuster ein Prozess VR (gestrichelt angedeutet) initiiert werden, welcher die Verfahrensschritte VR1 bis VR6 umfasst (vgl. Fig.6).

In diesem Prozess wird in einem Verfahrensschritt VR1 die Bilderfassungseinrichtung 110 am Roboter 11 zur fahrzeugseitigen Ladedose 2 herangefahren. In einem Verfahrensschritt VR2 erfolgt eine Bilderkennung des durch die Markierungen M2-1 bis M2-4 gebildeten Markierungsmusters. Ein Vergleich mit einem abgespeicherten Referenzmuster erfolgt im Verfahrensschritt VR3.

Wird in einer Abfrage AR1 bestätigt, dass das erkannte Markierungsmuster nicht mit dem abgespeicherten Referenzmuster übereinstimmt, so erfolgt im Verfahrensschritt VR1' eine Korrekturbewegung des Roboters 11.

Bei Übereinstimmung des erkannten Markierungsmusters mit dem Referenzmuster werden die Positionskoordinaten der fahrzeugeigenen Ladedose 2 von der Recheneinheit 107 der Ladestation 10 berechnet und der Steuereinheit 108 der Energieversorgungseinheit 1 übergeben (VR4).

Schließlich wird der Ladestecker 100 der Ladestation 10 mittels des Roboters 11 zur fahrzeugseitigen Ladedose 2 bewegt und mit dieser gekoppelt (Verfahrensschritt VR5).

In einer Abfrage AR2 erfolgt eine Überprüfung, ob das aufzuladende Kraftfahrzeug K1 aufgeladen ist oder nicht. Nach erfolgter Aufladung wird in einem Verfahrensschritt VR6 der Ladestecker 100 durch den Roboter 11 wieder von der Ladedose 2 getrennt und zur Ladestation 1 zurückbewegt.

Unabhängig vom dargestellten Verfahren ist es jedoch durchaus denkbar, dass die Position der fahrzeugseitigen Ladedose 2 einzig und allein durch die Bilderfassungseinrichtung 110 erfolgt, die auf dem Roboter 11 in der Nähe der Greifeinrichtung 109 angebracht ist.

Zur Erleichterung der Bilderkennung ist es dann besonders sinnvoll und zweckmäßig, wenn das Kraftfahrzeug K1 eine Ladedose 2 aufweist, um die außen herum wenigstens die drei Markierungen M2-1 bis M2-4 angebracht sind, welche in Bezug auf einen Bezugspunkt der Ladedose 2 ungleichmäßig um diese verteilt und/oder jeweils kodiert sind.

Diese Merkmale stellen bereits in Alleinstellung eine mögliche Erfindung beziehungsweise eine denkbare, erfindungsgemäße Ausgestaltung eines Kraftfahrzeugs dar.

### BEZUGSZEICHENLISTE

- 1: Energieversorgungseinheit
- 2: fahrzeugseitige Energieversorgungs-Schnittstelle; Ladedose
- 3: Kommunikationseinrichtung; WLAN-Port
- 4: Bilderfassungeinrichtung; Kamera (stereoskopisch)
- 5: Bildverarbeitungseinheit
- 6: Vergleichseinheit
- 7: Speichereinheit
- 8: Recheneinheit
- 9: Abdeckung
- 10: Ladestation
- 11: Roboter
- 12: Parkplatz-Markierungen
- 13: rahmenartiges Bauteil
- 20: Bezugspunkt
- 21,22: elektrische Kontakte

- 100: Energieversorgungs-Schnittstelle einer Ladestation; Ladestecker
- 101: Ladekabel
- 102: Aufbewahrungsraum
- 103: Kommunikationseinrichtung, WLAN-Port
- 104: Bildverarbeitungseinheit
- 105: Vergleichseinheit
- 106: Speichereinheit
- 107: Recheneinheit
- 108: Steuereinheit
- 109: Greifeinrichtung
- 110: Bilderfassungseinrichtung
- 111: Bezugspunkt

- A1, A2: Abfragen
- AR1, AR2: Abfragen
- K1: Kraftfahrzeug
- K2: Kraftfahrzeug
- KO1: Koordinatensystem der Energieversorgungseinheit
- KO2: Koordinatensystem des Roboters
- KO3: Koordinatensystem des Kraftfahrzeugs
- LS: induktives Leitsystem
- M1-1: optisch erfassbares Merkmal der Energieversorgungseinheit (kodierte Markierung)
- M1-2: optisch erfassbares Merkmal der Energieversorgungseinheit (kodierte Markierung)
- M1-3: optisch erfassbares Merkmal der Energieversorgungseinheit (kodierte Markierung)
- M1-4: optisch erfassbares Merkmal der Energieversorgungseinheit (kodierte Markierung)
- M2-1: optisch erfassbares Merkmal des Kraftfahrzeugs (kodierte Markierung)
- M2-2: optisch erfassbares Merkmal des Kraftfahrzeugs (kodierte Markierung)
- M2-3: optisch erfassbares Merkmal des Kraftfahrzeugs (kodierte Markierung)
- M2-4: optisch erfassbares Merkmal des Kraftfahrzeugs (kodierte Markierung)
- V1, V1'-V7: Verfahrensschritte
- VR1, VR1'-VR5: Verfahrensschritte

- r1-r4: radiale Abstände der Markierungen zu einem Bezugspunkt
- ϕ: Vollwinkel (360°)
- ϕ1-ϕ4: Winkelabstände der Markierungen bezogen auf einen Vollwinkel

## Patentansprüche

1. Verfahren zur Durchführung wenigstens eines Energieversorgungsvorgangs zwischen einer Energieversorgungseinheit (1) und wenigstens einem mit Energie zu versorgenden Kraftfahrzeug (K1, K2), wobei eine Position einer fahrzeugseitigen Energieversorgungs-Schnittstelle (2) ermittelt und eine automatisierte Kopplung zwischen der fahrzeugseitigen Energieversorgungs-Schnittstelle (2) und einer Energieversorgungs-Schnittstelle (100) der Energieversorgungseinheit (1) dadurch erfolgt, dass die Energieversorgungs-Schnittstelle (100) der Energieversorgungseinheit (1) durch einen Roboter (11) zur fahrzeugseitigen Energieversorgungs-Schnittstelle (2) bewegt und mit dieser gekoppelt wird, **dadurch gekennzeichnet, dass** die Position der fahrzeugseitigen Energieversorgungs-Schnittstelle (2) relativ zur Energieversorgungseinheit (1) vor Durchführung des Energieversorgungsvorgangs durch das Kraftfahrzeug (K1, K2)) selbst ermittelt und vom Kraftfahrzeug (K1, K2) an die Energieversorgungseinheit (1) übermittelt wird.

2. Verfahren nach Anspruch 1, **dadurch gekennzeichnet, dass** die Position der fahrzeugseitigen Energieversorgungs-Schnittstelle (2) anhand von optisch erfassbaren Merkmalen (M1-1 bis M1-4) der Energieversorgungseinheit (1) ermittelt wird.

3. Verfahren nach Anspruch 2, **dadurch gekennzeichnet, dass** die Ermittlung der Position der fahrzeugseitigen Energieversorgungs-Schnittstelle (2) zusätzlich durch den Roboter (11) anhand von optisch erfassbaren Merkmalen (M2-1 bis M2-4) im Bereich der fahrzeugseitigen Energieversorgungs-Schnittstelle (2) erfolgt.

4. Kraftfahrzeug (K1, K2) zur Durchführung des Verfahrens nach einem der vorhergehenden Ansprüche, **dadurch gekennzeichnet, dass** dieses wenigstens eine Bilderfassungseinrichtung (4), eine Bildverarbeitungseinheit (5), eine Speichereinheit (7), eine Vergleichseinheit (6), eine Recheneinheit (8) und eine Kommunikationseinheit (3) aufweist, wobei die Bilderfassungseinrichtung (4), die Bildverarbeitungseinheit (5),die Speichereinheit (7), die Vergleichseinheit (6), die Recheneinheit (8) und die Kommunikationseinheit (3) signaltechnisch miteinander verbunden und derart ausgebildet sind, dass durch die Bilderfassungseinrichtung (4) optisch erfassbare Merkmale (M1-1 bis M1-4) der Energieversorgungseinheit (1) erfassbar sind und ein erfasstes Merkmalsmuster mit einem in der Speichereinheit (7) abgelegten Referenzmuster abgleichbar ist, wobei durch die Recheneinheit (8) auf Grund des erfassten Merkmalsmusters und eines positiven Abgleichs mit dem Referenzmuster eine Position der fahrzeugseitigen Energieversorgungs-Schnittstelle (2) relativ zur Energieversorgungseinheit (1) berechenbar und diese Position über die Kommunikationseinheit (3) an die Energieversorgungseinheit (1) übermittelbar ist.

5. Kraftfahrzeug (K1, K2) nach Anspruch 4, **dadurch gekennzeichnet, dass** dieses eine Energieversorgungs-Schnittstelle (2) aufweist, um die außen herum wenigstens drei optisch erfassbare Merkmale (M2-1 bis M2-4) angeordnet sind, welche in Bezug auf einen Bezugspunkt (20) der Energieversorgungs-Schnittstelle (2) ungleichmäßig um die Energieversorgungs-Schnittstelle (2) verteilt angeordnet und/oder jeweils kodiert sind.

6. Kraftfahrzeug (K1, K2) nach Anspruch 4, **dadurch gekennzeichnet, dass** vier optisch erfassbare Merkmale (M2-1 bis M2-4) vorhanden sind.

7. Kraftfahrzeug (K1, K2) nach Anspruch 4, **dadurch gekennzeichnet, dass** an der Energieversorgungs-Schnittstelle (2) ein rahmenartiges Bauteil (13) befestigt ist, welches eine andere Farbe als die Energieversorgungs-Schnittstelle (2) selbst aufweist.

8. Energieversorgungseinheit (1) zur Durchführung des Verfahrens nach einem der vorhergehenden Ansprüche 1 bis 4, mit wenigstens einem Roboter (11) zum Bewegen wenigstens einer Energieversorgungs-Schnittstelle (100) der Energieversorgungseinheit (1) zu einer Energieversorgungs-Schnittstelle (2) eines Kraftfahrzeugs (K1, K2) sowie mit wenigstens einer Kommunikationseinrichtung (103), **dadurch gekennzeichnet, dass** die Energieversorgungseinheit (1) mit mehreren, optisch erfassbaren Merkmalen (M1-1 bis M1-4) versehen und die wenigstens eine Kommunikationseinrichtung (103) zumindest zur Kommunikation mit einer fahrzeugseitigen Kommunikationseinrichtung (3) ausgebildet ist, derart, dass zumindest Positionsdaten der fahrzeugseitigen Energieversorgungs-Schnittstelle (2) relativ zur Energieversorgungseinheit (1) empfangbar sind.

9. Energieversorgungseinheit (1) nach Anspruch 8, **dadurch gekennzeichnet, dass** die optisch erfassbaren Merkmale (M1-1 bis M1-4) der Energieversorgungs-Schnittstelle (100) der Energieversorgungseinheit (1) in Bezug auf einen Bezugspunkt (111) der Energieversorgungs-Schnittstelle (100) ungleichmäßig um die Energieversorgungs-Schnittstelle (100) verteilt angeordnet und/oder jeweils kodiert sind.

## Claims

1. A method for the implementation of an energy supply operation between an energy supply unit (1) and at least one motor vehicle (K1, K2), to be supplied with energy, wherein a position of a vehicle-side energy supply interface (2) is determined and an automated coupling between the vehicle-side energy supply interface (2) and an energy supply interface (100) of the energy supply unit (1) takes place, in that the energy supply interface (100) of the energy supply unit (1) is moved by a robot (11) to the vehicle-side energy supply interface (2) and is coupled thereto, **characterized in that** the position of the vehicle-side energy supply interface (2) relative to the energy supply unit (1) is determined prior to implementation of the energy supply operation by the motor vehicle (K1, K2) itself and is transmitted from the motor vehicle (K1, K2) to the energy supply unit (1).

2. The method according to Claim 1, **characterized in that** the position of the vehicle-side energy supply interface (2) is determined by means of optically detectable features (M1-1 to M1-4) of the energy supply unit (1).

3. The method according to Claim 2, **characterized in that** the determination of the position of the vehicle-side energy supply interface (2) takes place additionally by the robot (11) by means of optically detectable features (M2-1 to M2-4) in the region of the vehicle-side energy supply interface (2).

4. The motor vehicle (K1, K2) for implementation of the method according to any one of the preceding claims, **characterized in that** said motor vehicle has at least one image capture device (4), an image processing unit (5), a memory unit (7), a comparison unit (6), a computer unit (8) and a communication unit (3), wherein the image capture device (4), the image processing unit (5), the memory unit (7), the comparison unit (6), the computer unit (8) and the communication unit (3) are connected with one another for signaling, and are designed in such a manner that optically detectable features (M1-1 to M1-4) of the energy supply unit (1) can be detected by the image capture device (4) and a detected feature pattern can be matched with a reference pattern stored in the memory unit (7), wherein on the basis of the detected feature pattern and a positive match with the reference pattern a positon of the vehicle-side energy supply interface (2) relative to the energy supply unit (1) can be calculated by the computer unit (8) and said position can be transmitted via the communication unit (3) to the energy supply unit (1).

5. The motor vehicle (K1, K2) according to Claim 4, **characterized in that** said motor vehicle has an energy supply interface (2), around the outside of which at least three optically detectable features (M2-1 to M2-4) are arranged, which are arranged with respect to a reference point (20) of the energy supply interface (2) distributed non-uniformly around the energy supply interface (2) and/or are in each case encoded.

6. The motor vehicle (K1, K2) according to Claim 4, **characterized in that** four optically detectable features (M2-1 to M2-4) are present.

7. The motor vehicle (K1, K2) according to Claim 4, **characterized in that** to the energy supply interface (2) a frame-like component (13) is fastened, which has a different color than the energy supply interface (2) itself.

8. The energy supply unit (1) for implementing the method according to any one of the preceding Claims 1 to 4, having at least one robot (11) for moving at least one energy supply interface (100) of the energy supply unit (1) to an energy supply interface (2) of a motor vehicle (K1, K2) and having at least one communication device (103), **characterized in that** the energy supply unit (1) is provided with a plurality of optically detectable features (M1-1 to M1-4) and the at least one communication device (103) is designed at least for communication with a vehicle-side communication device (3), in such a manner, that at least position data of the vehicle-side energy supply interface (2) relative to the energy supply unit (1) can be received.

9. The energy supply unit (1) according to Claim 8, **characterized in that** the optically detectable features (M1-1 to M1-4) of the energy supply interface (100) of the energy supply unit (1) are arranged with respect to a reference point (111) of the energy supply interface (100) distributed non-uniformly around the energy supply interface (100) and/or are in each case encoded.

## Revendications

1. Procédé pour l'exécution d'au moins un processus d'alimentation en énergie entre une unité d'alimentation en énergie (1) et au moins un véhicule automobile (K1, K2) à alimenter en énergie, une position d'une interface d'alimentation en énergie côté véhicule (2) étant déterminée et un couplage automatisé ayant lieu entre l'interface d'alimentation en énergie côté véhicule (2) et une interface d'alimentation en énergie (100) de l'unité d'alimentation en énergie (1), grâce au fait que l'interface d'alimentation en énergie (100) de l'unité d'alimentation en énergie (1) est déplacée par un robot (11) vers l'interface d'alimentation en énergie côté véhicule (2) et couplée avec celle-ci, **caractérisé en ce que** la position de l'interface d'alimentation en énergie côté véhicule (2) par rapport à l'unité d'alimentation en énergie (1) est déterminée avant l'exécution du processus d'alimentation en énergie par le véhicule automobile (K1, K2) lui-même et est transmise par le véhicule automobile (K1, K2) à l'unité d'alimentation en énergie (1).

2. Procédé selon la revendication 1, **caractérisé en ce que** la position de l'interface d'alimentation en énergie côté véhicule (2) est déterminée à l'aide de caractéristiques détectables optiquement (M1-1 à M1-4) de l'unité d'alimentation en énergie (1).

3. Procédé selon la revendication 2, **caractérisé en ce que** la détermination de la position de l'interface d'alimentation en énergie côté véhicule (2) a lieu en outre grâce au robot (11) à l'aide de caractéristiques détectables optiquement (M2-1 à M2-4) au niveau de l'interface d'alimentation en énergie côté véhicule (2).

4. Véhicule automobile (K1, K2) pour l'exécution du procédé selon l'une des revendications précédentes, **caractérisé en ce que** celui-ci comprend au moins un dispositif de détection d'images (4), une unité de traitement d'images (5), une unité de mémoire (7), une unité de comparaison (6), une unité de calcul (8) et une unité de communication (3), le dispositif de détection d'images (4), l'unité de traitement d'images (5), l'unité de mémoire (7), l'unité de comparaison (6), l'unité de calcul (8) et l'unité de communication (3) étant reliées entre elles à l'aide de signaux et conçues de façon à ce que le dispositif de détection d'images (4) permette de détecter des caractéristiques détectables optiquement (M1-1 à M1-4) de l'unité d'alimentation en énergie (1) et à ce qu'un motif de caractéristique détecté puisse être comparé avec un motif de référence enregistré dans l'unité de mémoire (7), l'unité de calcul (8) permettant de calculer, sur la base du motif de caractéristique détecté et d'une comparaison positive avec le motif de référence, une position de l'interface d'alimentation en énergie côté véhicule (2) par rapport à l'unité d'alimentation en énergie (1) et de transmettre cette position par l'intermédiaire de l'unité de communication (3) à l'unité d'alimentation en énergie (1).

5. Véhicule automobile (K1, K2) selon la revendication 4, **caractérisé en ce que** celui-ci comprend une l'interface d'alimentation en énergie (2) autour de laquelle sont disposées au moins trois caractéristiques détectables optiquement (M2-1 à M2-4), qui sont disposées et/ou codées respectivement de manière irrégulière autour de l'interface d'alimentation en énergie (2) par rapport à un point de référence (20) de l'interface d'alimentation en énergie (2).

6. Véhicule automobile (K1, K2) selon la revendication 4, **caractérisé en ce que** quatre caractéristiques détectables optiquement (M2-1 à M2-4) sont présentes.

7. Véhicule automobile (K1, K2) selon la revendication 4, **caractérisé en ce que**, sur l'interface d'alimentation en énergie (2) est fixé un composant en forme de cadre (13) qui présente une couleur différente de l'interface d'alimentation en énergie (2) elle-même.

8. Unité d'alimentation en énergie (1) pour l'exécution du procédé selon l'une des revendications précédentes 1 à 4, avec au moins un robot (11) pour le déplacement d'au moins une interface d'alimentation en énergie (100) de l'unité d'alimentation en énergie (1) vers une interface d'alimentation en énergie (2) d'un véhicule automobile (K1, K2) ainsi qu'avec au moins un dispositif de communication (103), **caractérisée en ce que** l'unité d'alimentation en énergie (1) est munie de plusieurs caractéristiques détectables optiquement (M1-1 à M1-4) et l'au moins un dispositif de communication (103) est conçu au moins pour la communication avec un dispositif de communication côté véhicule (3) de façon à ce qu'au moins des données de position de l'interface d'alimentation en énergie côté véhicule (2) par rapport à l'unité d'alimentation en énergie (1) puisse être reçues.

9. Unité d'alimentation en énergie (1) selon la revendication 8, **caractérisée en ce que** les caractéristiques détectables optiquement (M1-1 à M1-4) de l'interface d'alimentation en énergie (100) de l'unité d'alimentation en énergie (1) sont réparties et/ou codées respectivement de manière irrégulière autour de l'interface d'alimentation en énergie (100) par rapport à un point de référence (111) de l'interface d'alimentation en énergie (100).
